# EUROPEAN PATENT SPECIFICATION

(11) **EP 4 426 157 B1**
(45) Date of publication and mention of the grant of the patent: **01.04.2026**
(21) Application number: 22812587.8
(22) Date of filing: 01.11.2022
(51) Int. Cl.: A43B 13/12, A43B 13/18, B33Y 70/00, B33Y 80/00

(54) **MIDSOLE WITH A FOAMED THREE-DIMENSIONAL LATTICE STRUCTURE**
ZWISCHENSOHLE MIT EINER GESCHÄUMTEN DREIDIMENSIONALEN GITTERSTRUKTUR
SEMELLE INTERCALAIRE AVEC UNE STRUCTURE EN TREILLIS TRIDIMENSIONNEL EN MOUSSE

(30) Priority: 03.11.2021 CH 0704892021
(43) Date of publication of application: 11.09.2024
(60) Divisional application: 25227344.6
(73) Proprietor: On Clouds GmbH, 8005 Zürich (CH)
(72) Inventor: VOELCHERT, Johannes, 8005 Zurich (CH); ROMAIN, Jean-Philippe, 8005 Zurich (CH); ALTROGGE, Nils Arne, 8005 Zurich (CH); DESPOTS ALLAIRE, Renaud, 8005 Zurich (CH)
(74) Representative: Rentsch Partner AG
(86) International application number: PCT/EP2022/080399
(87) International publication number: WO 2023/078844

(56) References cited:
- US-A1- 2016 122 493
- US-A1- 2018 271 211

## Description

### Field of disclosure

The present invention lies in the field of additively manufacturing a midsole of a running shoe and in particular relates to a method for producing a midsole of a running shoe and to a midsole which is preferably produced by such a method.

### Background, prior art

Midsoles of running shoes primarily serve the purpose of providing sufficient cushioning during running. In the prior art, different cushioning systems are known. Such systems include open or closed cell polymer foams, gel cores, collapsible channels, shaft-like shock absorbers, and the like.

While many cushioning systems are well suited for providing sufficient cushioning, in particular of vertically occurring forces during running, they often suffer from relatively high weights. For example, a midsole being made of a polymer foam must possess a certain thickness and thus a certain weight in order to efficiently absorb any forces acting on the runner's foot during running.

The vast majority of the midsoles available on the market are being made by form-molding. For example, a polymer granulate is molten and provided together with a blowing agent into a barrel of an injection molding system. The molten polymer material is then introduced into a mold and upon pressure reduction, the blowing agent induces foaming. While such production methods are typically beneficial in regard of the production time per sole, they only allow to efficiently produce commodity midsoles, which cannot be readily adjusted to the individual runner's needs, i.e. the runner's individual biometric profile, such as individual gait characteristics. Midsoles known from the prior art are for example disclosed in US 2016 122 493 A1 and US 2018 271 211 A1.

### Summary of disclosure

Therefore, midsoles known in the prior art often suffer from one or more of non-sufficient cushioning, high weight resulting in more rapid fatigue, or lack any individual adjustments to the runner's needs.

It is a general object of the present invention to advance the state of the art in the field of midsoles, in particular of additively manufactured midsoles, and preferably overcome one or more disadvantages of the prior art fully or partly. In advantageous embodiments, a midsole and a corresponding manufacturing method is provided, which allows to produce a midsole which combines high cushioning with low overall weight of the midsole. In further advantageous embodiments, a midsole and a corresponding manufacturing method is provided, which is customized to the runner's individual biometric requirements. In a further advantageous embodiment, a method for producing a midsole is provided, which allows for a fast and cheap and thus efficient production of a midsole.

The general objective is achieved by the subject-matter of the independent claims. Further advantageous embodiments follow from the dependent claims and the disclosure.

In a first aspect, the overall objective is achieved by a method for producing a midsole for a running shoe. The method comprises the steps of:
a. Providing a three-dimensional model of a pre-product, which comprises a three-dimensional lattice structure. Particularly, the three-dimensional lattice structure comprises a plurality of struts and a plurality of nodes, the nodes directly connecting at least two different struts;
b. Additively manufacturing the three-dimensional pre-product, particularly layer by layer, according to the provided three-dimensional model of the pre-product;
c. Infusing the additively manufactured three-dimensional pre-product with a blowing agent in an autoclave at a first temperature and a first pressure; and
d. Foaming of the infused three-dimensional pre-product to generate the midsole, comprising an anisotropically foamed three-dimensional lattice structure.

The three-dimensional model of the three-dimensional pre-product is typically established on the basis of CAD (computer aided design). Thus, step a. can comprise a computer-implemented step, in which the three-dimensional model can be established and/or stored on a computer. The resulting CAD files can then be transformed into a suitable format which can be read by a 3D printer for the subsequent additive manufacturing step b. The pre-product describes an intermediate and real product of the method according to the invention, i.e. the product obtained by the additive manufacturing step b., which has not been infused and foamed yet.

A lattice structure of the pre-product and/or the midsole typically comprises supporting elements, such as a plurality of nodes and a plurality of struts. The supporting elements can define a plurality of voids, which drastically reduce the overall weight of the midsole. In some embodiments, at least two struts are directly connected by the same node. It is however also possible that a single node directly connects 3, 4, 5, 6, or even more struts. A lattice structure typically comprises different layers being arranged along the vertical direction of the midsole on top of each other. In some embodiments, the lattice structure may constitute a three-dimensional web. The lattice structure may not only be presented only in the pre-product, but is also be presented in the foamed midsoleas a foamed three-dimensional lattice structure.

The lattice structure of the pre-product and/or the foamed three-dimensional lattice structure may be a regular lattice structure, i.e. it may comprise a unit cell which is regularly repeated. Such regular structures are for example known from crystallography. It is for example possible that the lattice structure of the pre-product and/or the foamed three-dimensional lattice structure may be a triclinic, monoclinic, orthorhombic, tetragonal, hexagonal or cubic lattice system. For example, the lattice structure of the pre-product and/or the foamed three-dimensional lattice structure may be represented by the sodium chloride structure, the diamond structure, the zincblende structure, the caesium chloride structure or the like.

Furthermore, the lattice structure of the pre-product and/or the foamed three-dimensional lattice structure may comprise different lattice structures, respectively different lattice systems, being preferably selected from the structures/systems described above.

The advantage of a thus produced midsole is that a lattice structure is foamed after its production via additive manufacturing. The additive manufacturing allows to prepare complicated structures and geometries. Foaming of these structures then significantly increases the cushioning effect as compared to the non-foamed lattice structure. Particularly, additive manufacturing allows for specifically tailoring the properties of the lattice structure in certain areas, such as the heel area or only a part of it, for example the medial part of the heel area. This directly influences the subsequent foaming step. For example, if the diameter of a given strut is increased, this strut can foam and thus increase its volume to a larger extent than a strut with a smaller diameter. Performing the infusion only after additive manufacturing of the pre-product has the advantage that the amount of blowing agent can be accurately controlled. Although it would generally be possible to infuse the precursor material used for additive manufacturing, this has the disadvantage that blowing agent uncontrollably diffuses out of the precursor material before or during additive manufacturing. Therefore, there is a significantly decreased control about the pore size of the foam. Infusing the additively manufactured pre-product however avoids this problem and increases control about the foaming step. Furthermore, by infusing the already additively manufactured pre-product, it is in contrast to infusion of the precursor material for additive manufacturing, possible to readily vary the foam characteristics in specific areas of the midsole. For example, infusion can occur with a predefined pressure profile. Such pressure profiles may vary the pressure over time.

Steps c. and d. are typically performed in an autoclave and preferably within the same autoclave. Using the same vessel has the advantage that the overall production process becomes more efficient.

The lattice structure of the pre-product and/or the midsole may typically extend along the complete transverse direction of the midsole, respectively the pre-product, i.e. it may extend continuously from the medial side to the lateral side of the midsole, respectively the pre-product. Furthermore, the lattice structure may extend along at least 40%, particularly along at least 50%, particularly along at least 60%, particularly along at least 80%, particularly along at least 90%, particularly along at least 95%, of the longitudinal direction of the midsole, respectively the pre-product. In the vertical direction, the lattice structure may extend along at least 80%, particularly along at least 90%, particularly along at least 95%, of the vertical direction of the midsole, respectively the pre-product.

Infusion of the pre-product may typically comprise the absorption of a physical blowing agent by the pre-product. As the skilled person understands, a physical blowing agent is a blowing agent which can directly expand upon changing physical parameters, such as pressure and temperature. Physical blowing agent which can be used in some embodiments are water, CO₂, N₂, hydrocarbons, e.g. propane, butane, pentane or hexane, and derivatives thereof, such as halogenated hydrocarbons, e.g. dichloromethane, chloroform or fluorinated hydrocarbons, and mixtures thereof. In contrast, chemical blowing agents are blowing agents which can *in situ* liberate a blowing agent upon undergoing a chemical reaction. These comprise for example diazo compounds, metal hydrides and carbonates. In some embodiments, physical blowing agents are used in step c. and the physical blowing agent is a supercritical fluid. For example, the blowing agent may be infused under physical conditions under which the physical blowing agent is a supercritical fluid. Physical blowing agents and in particular supercritical fluids as physical blowing agents are advantageous for shoe soles, because such foams exhibit a significantly better cushioning behavior, i.e. they displace more as compared to foams having been foamed with a chemical blowing agent, and they can store a higher amount of energy during thread. This leads to a more pronounced rebound effect. Furthermore foams having been obtained from such physical blowing agents shoe less material fatigue over their usage time.

Infusion of the pre-product may in some embodiments be conducted for a duration of 10 min to 180 min, in particular from 40 min to 70 min.

Foaming may typically comprise a change in one or more physical parameters, such as pressure decrease and/or temperature increase.

Additive manufacturing has the advantage that even complex structures, such as a lattice structure can be readily produced, which would either not be producible by common molding techniques or only with sophisticated molds. Furthermore, by foaming the lattice structure, the cushioning effect is significantly increased as compared to a non-foamed lattice structure, while the stability of the midsole can still be maintained.

In some embodiments, the method according to the invention is performed mold-less, i.e. no mold is used for producing the midsole, which makes the production of the midsole more efficient.

The three-dimensional lattice structure of the pre-product and/or the midsole comprises, or may also consists of, at least two different materials. The two different material may in particular have different chemical, physical and/or mechanical properties. For example, it may be advantageous that the material provided in the heel area of the midsole has a higher cushioning effect, e.g. by providing a lattice structure with larger struts, e.g. with larger diameters, than in the forefoot area, and/or by providing a softer material than in other areas of the midsole.

The three-dimensional lattice structure of the pre-product and of the midsole, comprises multiple layers, wherein at least two layers consist of different materials. A layer typically extends essentially only in the longitudinal direction and in the transverse direction, but not in the vertical direction.

In some embodiments, the three-dimensional lattice structure of the pre-product and/or the midsole comprises a plurality of unit cells being defined by a plurality of nodes and by a plurality of struts being directly connected to these nodes.

In particular embodiments, the size of the unit cells may vary in at least one direction of the lattice structure, respectively the midsole. For example, from the heel area to the forefoot area, i.e. in the longitudinal direction of the midsole, the size of the unit cells may decrease. The size of a unit cell may for example be measured as the volume of the void defined by the unit cell. It may alternatively, or additionally, be possible that the size of the unit cells increases or decreases from the medial direction to the lateral direction of the midsole, i.e. along the transverse direction. Alternatively, or additionally, the size of the unit cells may increase or decrease in a vertical direction of the midsole.

In some embodiments, the midsole and/or the pre-product may comprise at least two different types of unit cells, i.e. unit cells having a different geometric shape. A unit cell may for example have the shape of a prism, e.g. a cuboid, a triangular, a pentagonal, hexagonal, heptagonal or octagonal prism. A unit cell may also have the shape of a polyhedron, in particular of a regular polyhedron. In embodiments with different types of unit cells, a first type of unit cells may for example consist of tetrahedral unit cells and a second type of unit cells may consist of cuboid unit cells.

Directional indications as used in the present disclosure are to be understood as follows: The longitudinal direction L of the midsole, respectively the pre-product, is described by an axis from the heel area to the forefoot area and thus extends along the longitudinal axis of the midsole, respectively the pre-product. The transverse direction T of the sole extends transversely to the longitudinal axis and substantially parallel to the underside of the midsole, respectively the pre-product, or substantially parallel to the ground. Thus, the transverse direction runs along a transverse axis of the midsole, respectively the pre-product. In the context of the present invention, the vertical direction V denotes a direction from the underside of the midsole towards the insole, or in the operative state towards the foot of the wearer, and thus runs along a vertical axis of the midsole, respectively the pre-product.

Further, the lateral area of the midsole, respectively the pre-product, refers to an area along the outer side of the midsole of a running shoe of a pair of running shoes, i.e. in the worn state, the lateral sides of each shoe containing a midsole are facing away from each other. Typically, the horizontal extension of the lateral area is a few centimeters, for example 0.1 to 5 cm, preferably 0.5 to 3 cm. The medial area of the midsole, respectively the pre-product, refers to an area along inner side of the midsole, of a running shoe, i.e. in the worn state, the medial sides of each shoe containing a midsole are facing each other. Typically, the horizontal extension of the medial area is a few centimeters, for example 0.1 to 5 cm, preferably 0.5 to 3 cm.

In some embodiments, providing the three-dimensional model of the pre-product comprises obtaining personalized biometric data of a runner and generating the three-dimensional model of the pre-product based on the obtained biometric data. In particular embodiments, the data may be gait data. Furthermore, the biometric data may be collected by attaching motion and/or pressure sensors to the runner's foot. Alternatively, obtaining the data may comprise collecting the corresponding data by cameras, particularly high-speed cameras. The data thus provided may then be used, in particular in a computer-implemented method, in order to generate the three-dimensional model of the three-dimensional pre-product, particularly the CAD data. For example, if it is determined that the runner makes the first contact with the ground with the lateral side of the heel area, then the lateral side of the model, respectively the pre-product may be designed such that the unit cell sizes are larger in this area than in other areas, preferably than in all other areas. Additionally, or alternatively, another material may be used which increases the cushioning effect at the lateral side of the heel area. Vice versa, if it is determined that the runner makes the first contact with the ground with the medial side of the heel area, then the model, respectively the pre-product, may be designed such that the unit cell sizes are larger in this area than in other areas, preferably than in all other areas. Additionally, or alternatively, another material may be used which increases the cushioning effect at the medial side of the heel area.

In some embodiments, the additively manufactured three-dimensional pre-product comprises, or consists of, a thermoplastic material, in particular an elastic thermoplastic material, such as thermoplastic polyurethane (TPU), polyolefins, rubber, particularly natural rubber, polyamides, such as PA-11 polyether block amide, polyesters, such as polyethylene terephthalate or polybutylene terephthalate, or mixtures thereof. It is thus understood that these materials can be used in the additive manufacturing step b. of the method according to the invention.

The additive manufacturing in step b. can preferably comprise selective laser sintering (SLS).

In some embodiments, the first temperature is between 100 °Cto 180 °C, preferably between 125°C to 160°C, and/or wherein the first pressure is between 80 bar to 250 bar, preferably between 150 bar to 200 bar.

In some embodiments, foaming is performed at a second temperature between 100 °C to 180 °C, preferably between 125 °C to 160°C, and/or wherein foaming is performed upon reducing the first pressure, preferably continuously reducing the first pressure. Typically, the first pressure is reduced to 1 atmosphere. Typically, the first pressure is released at a rate of 10-15 seconds for 200 bar, upon which foaming occurs.

In some embodiments, the second pressure may be at least 50%, particularly at least 75%, particularly at least 90%, particularly at least 95%, of the first pressure.

In a second aspect, the overall objective is achieved by a midsole, in particular by an additively manufactured midsole. Preferably such a midsole may be produced according to the method of any of the embodiments described herein with respect to the first aspect. The midsole comprises a foamed three-dimensional lattice structure comprising, or consisting of, a foamed thermoplastic material, which can in particular be an open cell foam or a closed cell foam.

It is understood that because the midsole according to the second aspect of the disclosure can be produced by the method according to the first aspect of the disclosure, the embodiments described for the first aspect are also applicable for the second aspect of the disclosure, i.e. the midsole as such.

In some embodiments, the density of the foamed thermoplastic material is 200 kg/m³ to 800 kg/m³, preferably between 350 kg/m³ to 600 kg/m³.

In some embodiments, the foamed three-dimensional lattice structure comprises a plurality of struts and a plurality of nodes, the nodes directly connecting at least two different struts, in particular as it has been defined in the embodiments of the first aspect of the invention.

In some embodiments, the foamed three-dimensional lattice structure comprises a plurality of unit cells being defined by the plurality of nodes and by the plurality of struts being directly connected to these nodes, wherein one or more or all, unit cells are collapsible, preferably fully collapsible, under the forces exerted on the midsole during running, in particular the forces acting in the vertical and/or in the longitudinal direction. Collapsing may preferably occur by shearing.

In some embodiments, the midsole and in particular the foamed three-dimensional lattice structure of the midsole, comprises at least two regions having different physical, chemical and/or mechanical properties. For example, it may be advantageous that the material provided in the heel area of the midsole as a higher cushioning effect, for example by providing a foamed three-dimensional lattice structure with larger struts, e.g. with larger diameters, than in the forefoot area, and/or by providing a softer material than in other areas of the sole. In some embodiments, the foamed three-dimensional lattice structure may be configured such that the cushioning effect in the heel area is larger than in any other area of the midsole, i.e. larger than in the midfoot area and, than in in the forefoot area. For example, increased cushioning may be achieved by using a softer material or by providing unit cells which define larger voids than unit cells in the forefoot or midfoot area.

In some embodiments, the foamed three-dimensional lattice structure may be configured such that it can be deformed, in particular by shearing, upon exposure to forces occurring during running and being exerted on the midsole in the vertical direction and/or in the longitudinal direction and/or any combinations thereof, i.e. in both the vertical and longitudinal direction. Furthermore, the foamed three-dimensional lattice structure may be configured such that its deformation in the transverse direction, i.e. from the medial side to the lateral side and vice versa, is essentially avoided or at least diminished with respect to the possible deformation in the vertical directions and in the longitudinal direction. For example, this may be achieved by stiffening structures, which prevent transverse deformation. Such midsoles are beneficial, as the runner can achieve a more stable foot step.

The foamed three-dimensional lattice structure comprises, or consists of, at least two different materials. The foamed three-dimensional lattice structure of the midsole comprises multiple layers, wherein at least two layers consist of different materials.

The foamed three-dimensional lattice structure may typically extend along the complete transverse direction of the midsole, i.e. it may extend continuously from the medial side to the lateral side of the midsole. Furthermore, the foamed three-dimensional lattice structure may extend along at least 40%, particularly along at least 50%, particularly along at least 60%, particularly along at least 80%, particularly along at least 90%, particularly along at least 95%, of the longitudinal direction of the midsole. In the vertical direction, the lattice structure may extend along at least 80%, particularly along at least 90%, particularly along at least 95%, of the vertical direction of the midsole.

The foamed three-dimensional lattice structure is an anisotropically foamed three-dimensional lattice structure. Anistropically foamed lattice structures have the advantage that different mechanical properties can be achieved in different areas of the sole. A greater extent of foaming typically leads to a softer sole and therefore to an increased cushioning effect. In contrast, less foaming leads to harder areas. This is for example desirable in the forefoot region, because in the forefoot region, cushioning is usually only of minor importance, however, for the push off movement a harder area results in a better force transmission and therefore to a more powerful push off.

According to a third aspect, the overall objective is achieved by a shoe, particularly a running shoe, comprising the midsole according to any of the embodiments described herein, and optionally an outsole being connected to the midsole.

In some embodiments, the midsole of a shoe is divided into several separate portions. These separate portions may be spaced apart from each other. For example, in certain embodiments a first portion may be arranged in the heel area of the shoe sole and a second, separate, portion may be arranged in the midfoot area and/or the forefoot area. Alternatively, the midsole according to the second aspect may only be arranged in the forefoot area or only in the heel area or only in the midfoot area of the sole. The rest of the sole may in these embodiments comprise a common midsole portion, e.g. a foamed massive portion.

In some embodiments, the overall density of the midsole is between 0.07 g/cm³ to 0.28 g/cm³.

### Brief description of the figures

The herein described invention will be more fully understood from the detailed description given herein below and the accompanying drawings which should not be considered limiting to the invention described in the appended claims. The drawings are showing:
- Fig. 1: a schematic view of a shoe with a midsole according to an embodiment of the invention;
- Fig. 2: a lattice structure of a midsole according to another embodiment of the invention;
- Fig. 3: a schematic view of a sole with a midsole according to another embodiment of the invention;
- Fig. 4a and b: a comparison between foaming using supercritical physical blowing agents and foaming with chemical blowing agents.

### Exemplary embodiments

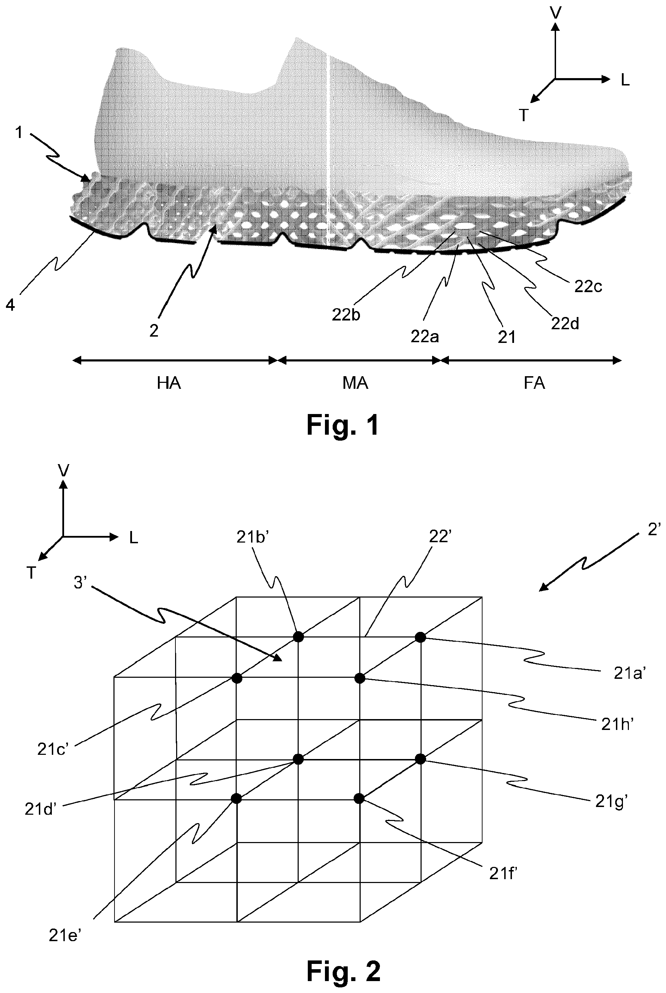

Figure 1 shows a shoe with midsole 1 comprising a foamed lattice structure 2 which has been prepared by additive manufacturing and subsequent blowing agent infusion and foaming. Lattice structure 2 comprises a plurality of nodes 21 (only a single node is referenced for clarity purposes), which directly connects four struts 22a, 22b, 22c, 22d (node 21 is further connected in the transverse direction to another strut, which is not visible). Midsole 1 is further divided into heel area HA, midfoot area MA and forefoot area FA. As can be seen, the lattice structure 2 extends over the complete extension in the longitudinal direction L, i.e. from the heel edge to the midsole tip, respectively the shoe tip, and also extends over the complete vertical extension of the midsole in the vertical direction V and also over the complete transverse extension of the midsole in the transverse direction T. Furthermore, outsole 4 not being part of the midsole is attached to midsole 1.

Figure 2 shows schematically a portion of a lattice structure 2'. In this embodiment, lattice structure 2 comprises a plurality of cuboid unit cells 3' (only a single unit cell is referenced from clarity purposes), being defined by eight nodes 21a'-h', which are directly connected with each other by struts 22' (only a single strut is referenced for clarity purposes). The struts and nodes define one void per unit cell, which can collapse in order to cushion forces occurring during running and acting on the runner's foot in both the vertical direction V and the longitudinal direction L, including all overlapping directions thereof. For example, unit cell 3' can collapse via shearing in order to absorb such forces.

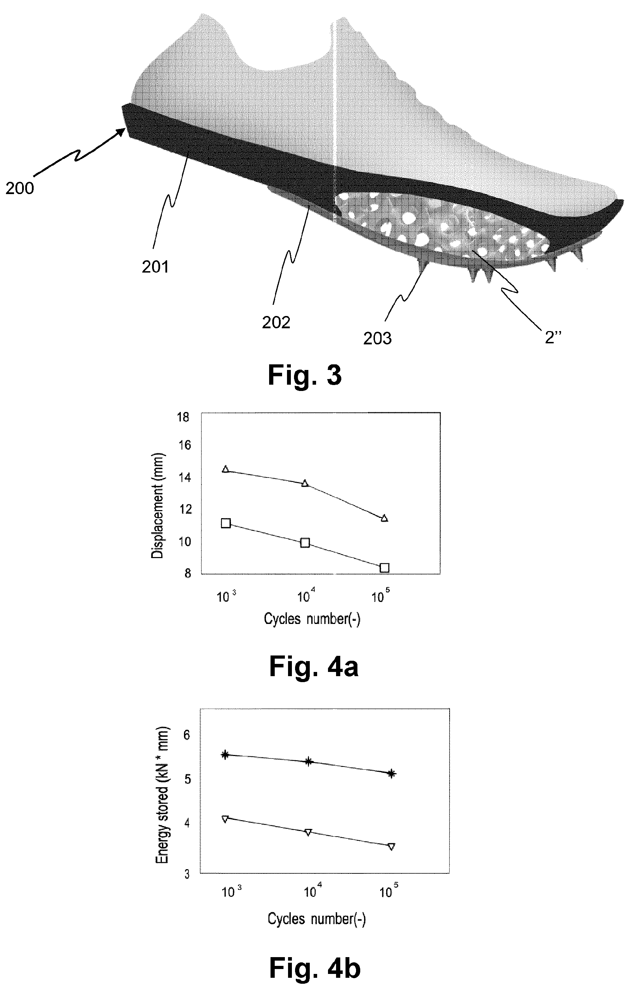

Figure 3 shows a sole 200 of a shoe, in which midsole 2" with the foamed lattice structure is only arranged in the forefoot area and in the midfoot area, but not in the heel area. The heel area comprises in this embodiment foamed massive portion 201. The midfoot and front foot area comprise an elastic rigid, and preferably incompressible, plate 202 with spikes 203.

Fig. 4a shows the displacement of a foam obtained by employing supercritical physical blowing agents (Δ) and chemical blowing agents (□) under compression tests at a frequency and axial load relevant for footwear applications. Fig. 4b shows the energy stored by the foam during these tests ( 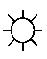 physical blowing agent; **▼** chemical blowing agent). Thus, physical blowing agents show a better rebound effect, decreased material fatigue and better cushioning than chemical blowing agents.

## Claims

1. Method for producing a midsole (1) for a running shoe, the method comprising:
a. Providing a three-dimensional model of a three-dimensional pre-product, wherein the pre-product comprises a three-dimensional lattice structure (2), wherein the three-dimensional lattice structure (2) comprises multiple layers, wherein at least two layers consist of different materials;
b. Additively manufacturing the three-dimensional pre-product according to the provided three-dimensional model of the pre-product;
c. Infusing the additively manufactured three-dimensional pre-product with a blowing agent in an autoclave at a first temperature and a first pressure; and
d. Foaming of the infused three-dimensional pre-product to generate the midsole (1) comprising an anisotropically foamed three-dimensional lattice structure.

2. The method according to claim 1, wherein the three-dimensional lattice structure (2) comprises a plurality of struts (22a, 22b, 22c, 22d) and a plurality of nodes (21), the nodes (21) connecting at least two different struts (22a, 22b, 22c, 22d).

3. The method according to any of the previous claims, wherein the three-dimensional lattice structure (2) comprises a plurality of unit cells (3') being defined by a plurality of nodes (21, 21a'-h') and by a plurality of struts (22') being connected to these nodes (21'), wherein preferably the size of the unit cells (3') varies in at least one direction of the lattice structure (2).

4. The method according to any of the previous claims, wherein providing the three-dimensional model of the pre-product comprises obtaining personalized biometric data, in particular gait data, of a runner, in particular by motion sensors and/or pressure sensors, and generating the three-dimensional model of the pre-product based on the obtained biometric data, in particular gait data.

5. The method according to any of the previous claims, wherein the additively manufactured three-dimensional pre-product comprises a thermoplastic material, such as thermoplastic polyurethane (TPU), poly olefins, rubber, particularly natural rubber, polyamides, polyether block amide, polyesters, such as polyethylene terephthalate or polybutylene terephthalate, or mixtures thereof.

6. The method according to any of the previous claims, wherein the first temperature is between 100 °Cto 180 °C, preferably between 125 °C to 160°C, and/or wherein the first pressure is between 80 bar to 250 bar, preferably between 150 bar to 200 bar.

7. The method according to any of the previous claims, wherein foaming is performed at a second temperature between 100 °C to 180 °C, preferably between 125 °C to 160°C, and/or wherein foaming is performed upon reducing the first pressure.

8. A midsole (1) for a running shoe, in particular a midsole being produced by a method according to any of the previous claims, comprising a foamed three-dimensional lattice structure (2) comprising a foamed thermoplastic material, which can in particular be an open cell foam or a closed cell foam, wherein the foamed three-dimensional lattice structure (2) is an anisotropically foamed three-dimensional lattice structure and comprises multiple layers, wherein at least two layers consist of different materials.

9. The midsole (1) according to claim 8, wherein the density of the foamed thermoplastic material is 200 kg/m³ to 800 kg/m³, preferably between 350 kg/m³ to 600 kg/m³.

10. The midsole (1) according to claim 8 or 9, wherein the midsole (1) comprises at least two regions having different physical, chemical and/or mechanical properties.

11. The midsole (1) according to any of claims 8 to 10, wherein the foamed three-dimensional lattice structure (2) is configured such that it can be deformed, in particular by shearing, upon exposure to forces occurring during running and being exerted on the midsole in the vertical direction and/or in the longitudinal direction and any combinations thereof.

12. The midsole (1) according to any of claims 8 to 11, wherein the foamed three-dimensional lattice structure (2) comprises a plurality of struts (22a, 22b, 22c) and a plurality of nodes (21), the nodes (21) connecting at least two different struts (22a, 22b, 22c).

13. The midsole (1) according to claim 12, wherein the foamed three-dimensional lattice structure (2) comprises a plurality of unit cells (3) being defined by a plurality of nodes (21, 21a-h) and by a plurality of struts (22, 22 a-c), being connected to these nodes, wherein one or more unit cells (3) are collapsible under the forces exerted on the midsole during running, in particular by shearing.

14. A shoe, particularly a running shoe, comprising the midsole (1) according to any of claims 8 to 13, and optionally an outsole being connected to the midsole (1).

## Patentansprüche

1. Verfahren zur Herstellung einer Mittelsohle (1) für einen Laufschuh, wobei das Verfahren folgendes umfasst:
a. Bereitstellen eines dreidimensionalen Modells eines dreidimensionalen Vorprodukts, wobei das Vorprodukt eine dreidimensionale Gitterstruktur (2) umfasst, wobei die dreidimensionale Gitterstruktur (2) mehrere Schichten umfasst, wobei mindestens zwei Schichten aus unterschiedlichen Materialien bestehen;
b. Additives Herstellen des dreidimensionalen Vorprodukts gemäß dem bereitgestellten dreidimensionalen Modell des Vorprodukts;
c. Imprägnieren des additiv hergestellten dreidimensionalen Vorprodukts mit einem Treibmittel in einem Autoklav bei einer ersten Temperatur und einem ersten Druck; und
d. Schäumen des imprägnierten dreidimensionalen Vorprodukts zum Erzeugen der Mittelsohle (1), die eine anisotrop geschäumte dreidimensionale Gitterstruktur umfasst.

2. Verfahren gemäß Anspruch 1, wobei die dreidimensionale Gitterstruktur (2) eine Vielzahl von Streben (22a, 22b, 22c, 22d) und eine Vielzahl von Knotenpunkten (21) umfasst, wobei die Knotenpunkte (21) mindestens zwei verschiedene Streben (22a, 22b, 22c, 22d) verbinden.

3. Verfahren gemäß einem der vorhergehenden Ansprüche, wobei die dreidimensionale Gitterstruktur (2) eine Vielzahl von Einheitszellen (3') umfasst, die durch eine Vielzahl von Knotenpunkten (21, 21a'-h') und durch eine Vielzahl von Streben (22') definiert sind, die mit diesen Knotenpunkten (21') verbunden sind, wobei vorzugsweise die Größe der Einheitszellen (3') in mindestens einer Richtung der Gitterstruktur (2) variiert.

4. Verfahren gemäß einem der vorhergehenden Ansprüche, wobei das Bereitstellen des dreidimensionalen Modells des Vorprodukts das Erhalten von personalisierten biometrischen Daten, insbesondere von Gangdaten, eines Läufers, insbesondere durch Bewegungssensoren und/oder Drucksensoren, und das Erzeugen des dreidimensionalen Modells des Vorprodukts auf der Basis der erhaltenen biometrischen Daten, insbesondere der Gangdaten, umfasst.

5. Verfahren gemäß einem der vorhergehenden Ansprüche, wobei das additiv hergestellte dreidimensionale Vorprodukt ein thermoplastisches Material umfasst, wie etwa thermoplastisches Polyurethan (TPU), Polyolefine, Kautschuk, insbesondere Naturkautschuk, Polyamide, Polyetherblockamid, Polyester, wie etwa Polyethylenterephthalat oder Polybutylenterephthalat, oder Mischungen davon.

6. Verfahren gemäß einem der vorhergehenden Ansprüche, wobei die erste Temperatur zwischen 100 °C und 180 °C, vorzugsweise zwischen 125 °C und 160 °C liegt, und/oder wobei der erste Druck zwischen 80 bar und 250 bar, vorzugsweise zwischen 150 bar und 200 bar liegt.

7. Verfahren gemäß einem der vorhergehenden Ansprüche, wobei das Schäumen bei einer zweiten Temperatur zwischen 100 °C und 180 °C, vorzugsweise zwischen 125 °C und 160 °C, durchgeführt wird und/oder wobei das Schäumen nach Verringerung des ersten Drucks durchgeführt wird.

8. Mittelsohle (1) für einen Laufschuh, insbesondere eine Mittelsohle, die durch ein Verfahren gemäß einem der vorhergehenden Ansprüche hergestellt wird, umfassend eine geschäumte dreidimensionale Gitterstruktur (2), die ein geschäumtes thermoplastisches Material umfasst, das insbesondere ein offenzelliger Schaum oder ein geschlossenzelliger Schaum sein kann, wobei die geschäumte dreidimensionale Gitterstruktur (2) eine anisotrop geschäumte dreidimensionale Gitterstruktur ist und mehrere Schichten umfasst, wobei mindestens zwei Schichten aus unterschiedlichen Materialien bestehen.

9. Mittelsohle (1) gemäß Anspruch 8, wobei die Dichte des geschäumten thermoplastischen Materials 200 kg/m³ bis 800 kg/m³, vorzugsweise zwischen 350 kg/m³ bis 600 kg/m³ beträgt.

10. Mittelsohle (1) gemäß Anspruch 8 oder 9, wobei die Mittelsohle (1) mindestens zwei Bereiche mit unterschiedlichen physikalischen, chemischen und/oder mechanischen Eigenschaften umfasst.

11. Mittelsohle (1) gemäß einem der Ansprüche 8 bis 10, wobei die geschäumte dreidimensionale Gitterstruktur (2) so konfiguriert ist, dass sie bei Einwirkung von Kräften, die während des Laufens auftreten und auf die Mittelsohle in vertikaler Richtung und/oder in Längsrichtung und beliebigen Kombinationen davon ausgeübt werden, insbesondere durch Scherung verformt werden kann.

12. Mittelsohle (1) gemäß einem der Ansprüche 8 bis 11, wobei die geschäumte dreidimensionale Gitterstruktur (2) eine Vielzahl von Streben (22a, 22b, 22c) und eine Vielzahl von Knotenpunkten (21) umfasst, wobei die Knotenpunkte (21) mindestens zwei verschiedene Streben (22a, 22b, 22c) verbinden.

13. Mittelsohle (1) gemäß Anspruch 12, wobei die geschäumte dreidimensionale Gitterstruktur (2) eine Vielzahl von Einheitszellen (3) umfasst, die durch eine Vielzahl von Knotenpunkten (21, 21a-h) und durch eine Vielzahl von Streben (22, 22a-c) definiert sind, die mit diesen Knotenpunkten verbunden sind, wobei eine oder mehrere Einheitszellen (3) unter den beim Laufen auf die Mittelsohle ausgeübten Kräften, insbesondere durch Scheren, kollabierbar sind.

14. Schuh, insbesondere Laufschuh, umfassend die Mittelsohle (1) gemäß einem der Ansprüche 8 bis 13, wobei optional eine Aussensohle mit der Mittelsohle (1) verbunden ist.

## Revendications

1. Procédé de fabrication d'une semelle intermédiaire (1) pour une chaussure de course, le procédé comprenant :
a. Fourniture d'un modèle tridimensionnel d'un pré-produit tridimensionnel, dans lequel le pré-produit comprend une structure en treillis tridimensionnelle (2), dans laquelle la structure en treillis tridimensionnelle (2) comprend plusieurs couches, dans laquelle au moins deux couches sont constituées de matériaux différents ;
b. Fabrication additive du pré-produit tridimensionnel selon le modèle tridimensionnel fourni du pré-produit ;
c. Infusion du pré-produit tridimensionnel fabriqué additivement avec un agent gonflant dans un autoclave à une première température et une première pression ; et
d. Moussage du pré-produit tridimensionnel infusé pour générer la semelle intermédiaire (1) comprenant une structure en treillis tridimensionnelle moussée anisotrope.

2. Procédé selon la revendication 1, dans lequel la structure tridimensionnelle en treillis (2) comprend une pluralité de traverses (22a, 22b, 22c, 22d) et une pluralité de nœuds (21), les nœuds (21) connectant au moins deux traverses différentes (22a, 22b, 22c, 22d).

3. Procédé selon l'une quelconque des revendications précédentes, dans lequel la structure de treillis tridimensionnelle (2) comprend une pluralité de cellules unitaires (3') étant définies par une pluralité de nœuds (21, 21a'-h') et par une pluralité de traverses (22') étant connectées à ces nœuds (21'), dans lequel, de préférence, la taille des cellules unitaires (3') varie dans au moins une direction de la structure de treillis (2).

4. Procédé selon l'une quelconque des revendications précédentes, dans lequel la fourniture du modèle tridimensionnel du pré-produit comprend l'obtention de données biométriques personnalisées, notamment de marche, d'un coureur, notamment par des capteurs de mouvement et/ou des capteurs de pression, et la génération du modèle tridimensionnel du pré-produit sur la base des données biométriques, notamment de marche, obtenues.

5. Procédé selon l'une quelconque des revendications précédentes, dans lequel le pré-produit tridimensionnel fabriqué additivement comprend un matériau thermoplastique, tel que le polyuréthane thermoplastique (TPU), les poly oléfines, le caoutchouc, notamment le caoutchouc naturel, les polyamides, le polyéther block amide, les polyesters, tels que le polyéthylène téréphtalate ou le polybutylène téréphtalate, ou leurs mélanges.

6. Procédé selon l'une quelconque des revendications précédentes, dans lequel la première température est comprise entre 100 °C et 180 °C, de préférence entre 125 °C et 160°C, et/ou dans lequel la première pression est comprise entre 80 bar et 250 bar, de préférence entre 150 bar et 200 bar.

7. Procédé selon l'une quelconque des revendications précédentes, dans lequel le moussage est réalisé à une seconde température comprise entre 100 °C et 180 °C, de préférence entre 125 °C et 160 °C, et/ou dans lequel le moussage est réalisé lors de la réduction de la première pression.

8. Semelle intermédiaire (1) pour une chaussure de course, en particulier une semelle intermédiaire produite par un procédé selon l'une quelconque des revendications précédentes, comprenant une structure en treillis tridimensionnelle moussée (2) comprenant un matériau thermoplastique moussé, qui peut notamment être une mousse à cellules ouvertes ou une mousse à cellules fermées, dans laquelle la structure en treillis tridimensionnelle moussée (2) est une structure en treillis tridimensionnelle moussée anisotrope et comprend plusieurs couches, dans laquelle au moins deux couches sont constituées de matériaux différents.

9. Semelle intermédiaire (1) selon la revendication 8, dans laquelle la densité du matériau thermoplastique moussé est comprise entre 200 kg/m³ et 800 kg/m³, de préférence entre 350 kg/m³ et 600 kg/m³.

10. Semelle intermédiaire (1) selon la revendication 8 ou 9, dans laquelle la semelle intermédiaire (1) comprend au moins deux régions ayant des propriétés physiques, chimiques et/ou mécaniques différentes.

11. Semelle intermédiaire (1) selon l'une quelconque des revendications 8 à 10, dans laquelle la structure en treillis tridimensionnelle moussée (2) est configurée de manière à pouvoir être déformée, notamment par cisaillement, lors de l'exposition aux forces se produisant pendant la course et s'exerçant sur la semelle intermédiaire dans la direction verticale et/ou dans la direction longitudinale et toutes combinaisons de celles-ci.

12. Semelle intermédiaire (1) selon l'une quelconque des revendications 8 à 11, dans laquelle la structure en treillis tridimensionnelle moussée (2) comprend une pluralité de traverses (22a, 22b, 22c) et une pluralité de nœuds (21), les nœuds (21) connectant au moins deux traverses différentes (22a, 22b, 22c).

13. Semelle intermédiaire (1) selon la revendication 12, dans laquelle la structure en treillis tridimensionnelle moussée (2) comprend une pluralité de cellules unitaires (3) étant définies par une pluralité de nœuds (21, 21a-h) et par une pluralité de traverses (22, 22 a-c), étant reliées à ces nœuds, dans laquelle une ou plusieurs cellules unitaires (3) sont affaissables sous l'effet des forces exercées sur la semelle intermédiaire lors de la course, notamment par cisaillement.

14. Chaussure, notamment chaussure de course, comprenant la semelle intermédiaire (1) selon l'une quelconque des revendications 8 à 13, et optionnellement une semelle extérieure étant reliée à la semelle intermédiaire (1).
